# EUROPEAN PATENT SPECIFICATION

(11) **EP 2 530 117 B1**
(45) Date of publication and mention of the grant of the patent: **26.03.2014**
(21) Application number: 11168107.8
(22) Date of filing: 30.05.2011
(51) Int. Cl.: C08L 23/12

(54) **Process for producing polypropylene compounds with low CLTE**
Verfahren zur Herstellung von Polypropylenverbindungen mit geringem CLTE
Procédé de production de composés de polypropylène avec un CLTE faible

(43) Date of publication of application: 05.12.2012
(73) Proprietor: Borealis AG, 1220 Vienna (AT)
(72) Inventor: Velichko, Hristov, 4040 Linz (AT); Grein, Christelle, 4020 Linz (AT)
(74) Representative: Lux, Berthold

(56) References cited:
- EP-A1- 1 086 986
- EP-A1- 2 239 298
- WO-A1-2010/142540

## Description

The present invention relates to a novel process for making polypropylene compounds having a low coefficient of thermal expansion (CLTE) as well as to the polypropylene compounds obtained by said process.

Polypropylene is the material of choice in many applications as it can be tailored to specific purposes needed. For instance heterophasic polypropylenes are widely used in the automobile industry (for instance in bumper applications) as they combine good stiffness with reasonable impact strength behavior. Heterophasic polypropylenes contain a polypropylene matrix in which an amorphous phase is dispersed. The amorphous phase contains a propylene copolymer rubber, like an ethylene propylene rubber (EPR) or a ethylene propylene diene monomer polymer (EPDM). Further the heterophasic polypropylene contains a crystalline polyethylene to some extent. In the automobile industry such heterophasic polypropylene grades contain an amount of about 30 wt.-% propylene copolymer rubber, which normally is produced directly in one or two gas phase reactors or added externally to the matrix via a compounding step. These materials are normally used in combination with 10 to 30 wt.-% mineral filler, like talcum, which overall leads to polypropylene compounds offering a good balance of stiffness and impact strength. It is also known that the properties of such polypropylene compounds can be further improved by adding further elastomer being different to the propylene copolymer rubber of the heterophasic polypropylene. Typical examples of such elastomers are polyethylene containing to some extent long-chain α-olefins, like 1-hexene, or styrenic based elastomers.

Especially in the automobile industry large parts, e.g. body panels, are prepared from such compounds by injection molding. However the disadvantage of these materials is, that they have a rather high coefficient of thermal expansion (CLTE), which makes them not suitable for zero-gap applications, where the polypropylene compounds should have a coefficient of thermal expansion (CLTE) as close as possible to that of adjacent steel parts.

Document EP 1 086 986 discloses a first composition comprising two propylene polymers and second composition comprising the first composition, an elastomer and an inorganic filler. Said composition can be used for example in automobile parts. EP 1 086 986 does not disclose the addition of the elastomer downstream, in the same extruder, after having applied stress to the first composition.

Accordingly the object of the present invention is to provide a process which enables a skilled person to reduce the coefficient of thermal expansion (CLTE) of a polypropylene compound suitable for the automobile industry without compromising the mechanical properties, like stiffness and toughness.

The finding of the present invention is that a polypropylene compound must be produced by feeding a heterophasic propylene copolymer (HECO) into an extruder, melting said heterophasic propylene copolymer (HECO), and adding subsequently the plastomer (P), i.e. the external rubber, to the molten heterophasic propylene copolymer (HECO).

Accordingly the present invention is directed to a process for producing a polypropylene compound (PP-C) comprising a heterophasic propylene copolymer (HECO), a plastomer (P) and optionally a mineral filler (F), said process comprises the steps of
(A) feeding the heterophasic propylene copolymer (HECO) and the optional mineral filler (F) into an extruder (E),
(B) applying shear stress in a first mixing zone (MZ1) on the heterophasic propylene copolymer (HECO) and the optional mineral filler (F),
(C) adding downstream to the first mixing zone (MZ1) the plastomer (P) to the heterophasic propylene copolymer (HECO) and the optional mineral filler (F),
(D) applying shear stress in a second mixing zone (MZ2) on the heterophasic propylene copolymer (HECO), the plastomer (P) and the optional mineral filler (F), and
(E) discharging the polypropylene compound (PP-C) from the extruder (E), wherein further
   (a) the heterophasic propylene copolymer (HECO) comprises
      (a-1) a polypropylene matrix (PP-M), and
      (a-2) an elastomeric propylene copolymer (EC) being dispersed in said polypropylene matrix (PP-M),
      and
   (b) the elastomeric propylene copolymer (EC) and the plastomer (P) are chemically different.

Preferably the shear stress in the first mixing zone (MZ1) is of such extent that the heterophasic propylene copolymer (HECO) is molten and/or the agglomerates of the mineral filler (F) are broken down. Preferably the mechanical energy input and/or the local melt pressure in the first mixing zone (MZ1) is higher than the mechanical energy input and/or the local melt pressure in the second mixing zone (MZ2).

It has been surprisingly found out that the inventive process leads to a significant reduction of the coefficient of thermal expansion (CLTE) of a polypropylene compound (PP-C) without compromising its stiffness and toughness compared to the same polypropylene compound (PP-C), which however has been produced in a conventional manner, i.e. by feeding all compounds together via a feed hopper upstream into the extruder.

In the following the invention is described in more detail.

### Process

Essential aspect of the invention is that the individual components of the polypropylene compound (PP-C) must be added by a specific regime. More precisely the heterophasic propylene copolymer (HECO) and the optional mineral filler (F) must be first subjected to a sheer stress (step (B)) and subsequently the plastomer (P) is added to such treated heterophasic propylene copolymer (HECO) and such treated optional mineral filler (F) (step (C)).

The extruder (E) used for the instant process preferably comprises in operation direction a feed-throat (FT), a first mixing zone (MZ1), a second mixing zone (MZ2) and a die (D), wherein between the first mixing zone (MZ1) and the second mixing zone (MZ2) a side feed-throat (SFT) is located. Preferably the extruder is a screw extruder, like a twin screw extruder. Accordingly the heterophasic propylene copolymer (HECO), the optional mineral filler (F) and - if present - other polymer components, but not the plastomer (P), are fed via the feed-throat (FT), thereby preferably using a feeder, into the extruder and is/are subsequently passed downstream through the first mixing zone (MZ1). Preferably the shear stress in said first mixing zone (MZ1) is of such extent that the heterophasic propylene copolymer (HECO) is molten and/or the agglomerates of the mineral filler (F) are broken. After the first mixing zone (MZ1), i.e. between the first mixing zone (MZ1) and the second mixing zone (MZ2), the plastomer (P) is added, i.e. fed into the extruder. Preferably the plastomer (P) is added via the side feed-throat (SFT), thereby preferably using a side feeder. Subsequently all components of the polypropylene compound (PP-C), i.e. including the plastomer (P), are passed downstream through the second mixing zone (MZ2). Preferably, the shear strain (product of the shear rate and residence time in this zone) experienced by the plastomer (P) in the second mixing zone (MZ2) is lower compared to the shear strain if the plastomer (P) would have been fed via the main feed-throat (FT) and passed consequently through the first mixing zone (MZ1) and the second mixing zone (MZ2). Finally the polypropylene compound (PP-C) is discharged via the die (D).

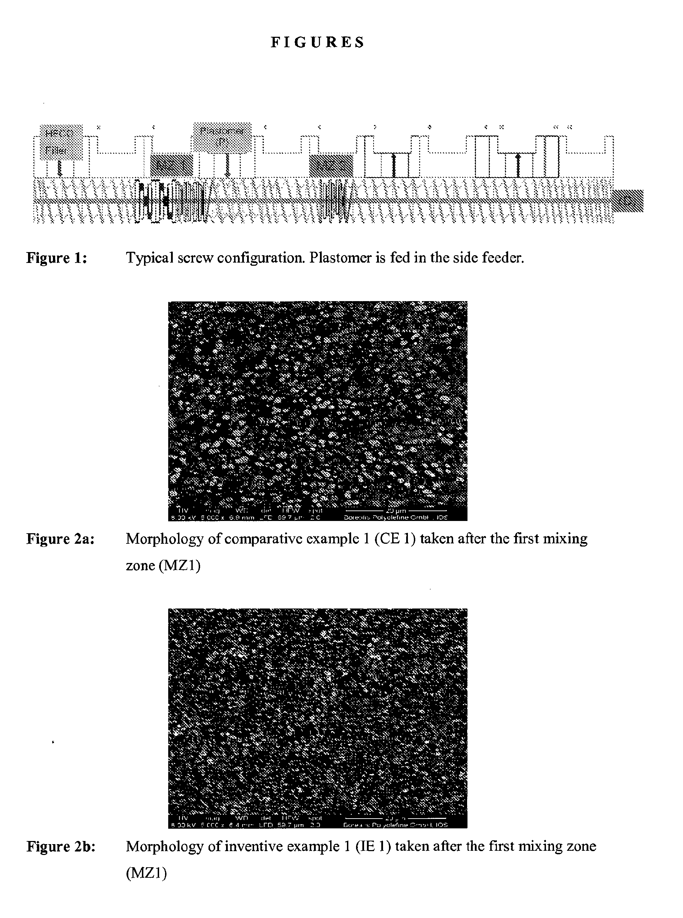

Figure 1 shows a preferred screw extruder used in the instant process with the specific section discussed in the previous paragraph.

Accordingly, the extruder is preferably a co-rotating fully intermeshing twin-screw extruder. Said extruder preferably has a modular screw, on which different screw elements can be assembled.

Preferably, the first mixing zone (MZ1) is longer than the second mixing zone (MZ2).

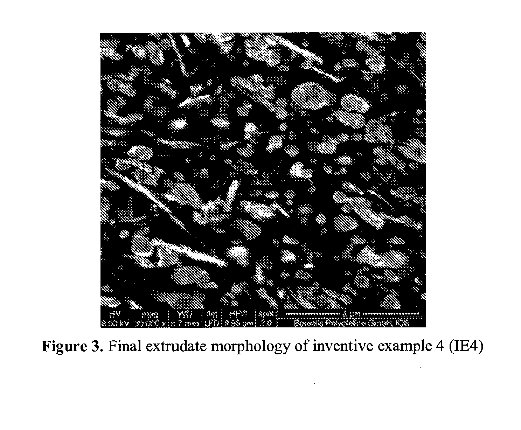

Due to the specific feeding regime, i.e. the plastomer (P) is added downstream of the first mixing zone (MZ1), the plastomer (P) has a shorter residence time in the extruder (E) compared to the other components in particular compared to the elastomeric propylene copolymer (EC) of the heterophasic propylene copolymer (HECO) and thus the plastomer (P) particles remain comparatively big. In addition, due to the missing of the plastomer (P) in the first mixing zone (MZ1), the local energy input is higher in the first mixing zone (MZ1) at the same throughput rate because of the reduced channel filling factor. The higher energy input results in smaller elastomeric propylene copolymer (EC) particles of the heterophasic propylene copolymer (HECO) (see figure 2). Due to the different treatment of the elastomeric propylene copolymer (EC) and the plastomer (P) a broader dispersed phase morphology of the overall elastomeric phase (see Figure 3) is achieved than by mixing all components at once. This specific morphology contributes to the improved stiff-tough-low CLTE property profile of the polypropylene compound (PP-C).

The present invention is also directed to an injection molding process, wherein the (molten) polyproplyne compound (PP-C) is directly extruded into a mold to form articles. Alternatively the extruded polypropylene compound (PP-C) can be pelletized and later subjected to an injection molding process to produce molded articles.

### Components

The components used for the preparation of the polypropylene compound (PP-C) are known in the art. As mentioned above it is however essential that the plastomer (P) is differently treated compared to the other components present in the polypropylene compound (PP-C). In other words the plastomer (P) has a shorter residence time in the extruder and/or is exposed to lower shear stress than the elastomeric propylene copolymer (EC) of the heterophasic propylene copolymer (HECO). The instant process is in particular useful for the preparation of polypropylene compounds (PP-C) applied in the automobile industry. In any case the polypropylene compound (PP-C) must comprise at least one heterophasic propylene copolymer (HECO). However it is also possible that the polypropylene compound (PP-C) comprises at least two different heterophasic propylene copolymers (HECO). It is especially preferred that the polypropylene compound (PP-C) comprises one or two, in particular one, heterophasic propylene copolymer(s) (HECO).

The expression "heterophasic" indicates that the elastomeric propylene copolymer (EC) is (finely) dispersed in the polypropylene matrix (PP-M). In other words the elastomeric propylene copolymer (EC) forms inclusions in the polypropylene matrix (PP-M). Thus the polypropylene matrix (PP-M) contains (finely) dispersed inclusions being not part of the matrix and said inclusions contain the elastomeric propylene copolymer (EC). The term "inclusion" according to this invention shall preferably indicate that the polypropylene matrix (PP-M) and the inclusion form different phases within the heterophasic propylene copolymers (HECO), said inclusions are for instance visible by high resolution microscopy, like electron microscopy or scanning force microscopy. In case different heterophasic propylene copolymers (HECO) are used their polypropylene matrixes (PP-C) form together one continuous phase and their elastomeric propylene copolymers (EC) most probably one dispersed phase.

As defined herein the heterophasic propylene copolymers (HECO) comprises as polymer components only the polypropylene matrix (PP-M) and the elastomeric propylene copolymer (EC). In other words the heterophasic propylene copolymers (HECO) may contain further additives but no other polymer in an amount exceeding 5 wt-%, more preferably exceeding 3 wt.-%, like exceeding 1 wt.-%, based on the total heterophasic propylene copolymer (HECO), more preferably based on the polymers present in the heterophasic propylene copolymer (HECO). One additional polymer which may be present in such low amounts is a polyethylene which is a reaction product obtained by the preparation of the heterophasic propylene copolymers (HECO). Accordingly it is in particular appreciated that a heterophasic propylene copolymers (HECO) as defined in the instant invention contain only a polypropylene matrix (PP-M), an elastomeric propylene copolymer (EC) and optionally a polyethylene in amounts as mentioned in this paragraph. Further, throughout the present invention the xylene cold insoluble (XCI) fraction represents the polypropylene matrix (PP-M) and optionally the polyethylene of the heterophasic propylene copolymers (HECO) whereas the xylene cold soluble (XCS) fraction represents the elastomeric part of the heterophasic propylene copolymers (HECO), i.e. the elastomeric propylene copolymer (EC).

In the following the preferred heterophasic propylene copolymer (HECO) is defined in more detail. In addition to said preferred heterophasic propylene copolymer (HECO) other heterophasic propylene copolymers (HECO) may be additionally used.

However it is especially appreciated that the heterophasic propylene copolymer (HECO) as defined in more detail below is part of the instant polypropylene compound (PP-C).

Accordingly the polypropylene matrix (PP-M) content, i.e. the xylene cold insoluble (XCI) content, in the heterophasic propylene copolymers (HECO) is preferably in the range of 50.0 to 80.0 wt.-%, more preferably in the range of 55.0 to 78.0 wt.-%. In case polyethylene is present in the heterophasic propylene copolymers (HECO), the values for the polypropylene matrix (PP-M) content but not for the xylene cold insoluble (XCI) content may be a bit decreased.

On the other hand the elastomeric propylene copolymer (EC) content, i.e. the xylene cold soluble (XCS) content, in the heterophasic propylene copolymers (HECO) is preferably in the range of 20.0 to 50.0 wt.-%, more preferably in the range of 22.0 to 45.0 wt.-%.

The polypropylene matrix (PP-M) is featured by a rather low comonomer content. Accordingly it is preferred that the polypropylene matrix (PP-M) has a comonomer content of equal or below 1.0 wt.-%, more preferably equal or below 0.8 wt.-%, yet more preferably equal or below 0.5 wt.-%.

Thus the polypropylene matrix (PP-M) is preferably a random propylene copolymer (R-PP-M) or a propylene homopolymer (H-PP-M), the latter is especially preferred.

In case the polypropylene matrix (PP-M) is a random propylene copolymer (R-PP-M) it comprises monomers copolymerizable with propylene, for example comonomers such as ethylene and/or C₄ to C₁₂ α-olefins, in particular ethylene and/or C₄ to C₁₀ α-olefins, e.g. 1-butene and/or 1-hexene. Preferably the random propylene copolymer (R-PP-M) comprises, especially consists of, monomers copolymerizable with propylene from the group consisting of ethylene, 1-butene and 1-hexene. More specifically the random propylene copolymer (R-PP-M) comprises - apart from propylene - units derivable from ethylene and/or 1-butene. In a preferred embodiment the random propylene copolymer (R-PP-M) comprises units derivable from ethylene and propylene only. The comonomer content in the random propylene copolymer (R-PP-M) is preferably in the range of more than 0.5 to 1.0 wt.-%, still more preferably in the range of more than 0.5 to 0.8 wt.-%.

The expression homopolymer used in the instant invention relates to a polypropylene that consists substantially, i.e. of equal or more than 99.5 wt.-%, more preferably of at least 99.8 wt.-%, of propylene units. In a preferred embodiment only propylene units in the propylene homopolymer (H-PP) are detectable.

Further it is appreciated that the polypropylene matrix (PP-M) of the heterophasic propylene copolymer (HECO) has a moderate to high melt flow MFR₂ (230 °C). The melt flow rate MFR₂ (230 °C) of the polypropylene matrix (PP-M) equates in a first approximation with the melt flow rate MFR₂ (230 °C) of the xylene cold insoluble (XCI) fraction of heterophasic propylene copolymer (HECO). Thus it is preferred that the xylene cold insoluble (XCI) fraction of the heterophasic propylene copolymer (HECO) has a melt flow rate MFR₂ (230 °C) measured according to ISO 1133 of 20 to 400 g/10min, more preferably of 30 to 350 g/10min, still more preferably of 40 to 300 g/10min, yet more preferably of 15.0 to 150.0 g/10min, yet still more preferably of 20.0 to 90.0 g/10min, like of 25.0 to 75.0 g/10 min.

The second component of the heterophasic propylene copolymer (HECO) is the elastomeric propylene copolymer (EC).

The elastomeric propylene copolymer (EC) comprises, preferably consists of, units derivable from (i) propylene and (ii) ethylene and/or a C₄ to C₁₂ α-olefins, like C₄ to C₁₀ α -olefins, more preferably units derivable from (i) propylene and (ii) ethylene and a C₄ to C₁₂ α-olefin selected form the group consisting of 1-butene, 1-pentene, 1-hexene, 1-heptene and 1-octene. The elastomeric propylene copolymer (EC) may additionally contain units derived from a conjugated diene, like butadiene, or a non-conjugated diene, however it is preferred that the elastomeric copolymer consists of units derivable from (i) propylene and (ii) ethylene and/or C₄ to C₁₂ α-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric propylene copolymer (EC) comprises at least units derivable from propylene and ethylene and may comprise other units derivable from a further α-olefin as defined in the previous paragraph. However it is in particular preferred that the elastomeric propylene copolymer (EC) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as elastomeric propylene copolymer (EC) is especially preferred, the latter most preferred.

In the present invention the content of units derivable from propylene in the elastomeric propylene copolymer (EC) equates with the content of propylene detectable in the xylene cold soluble (XCS) fraction. Accordingly the propylene detectable in the xylene cold soluble (XCS) fraction ranges from 50.0 to 80.0 wt.-%, more preferably 55.0 to 75.0 wt.-%. Thus in a specific embodiment the elastomeric propylene copolymer (EC), i.e. the xylene cold soluble (XCS) fraction, comprises from 20.0 to 50.0 wt.-%, more preferably 25.0 to 45.0 wt.-%, units derivable from ethylene and/or a C₄ to C₁₂ α-olefins, preferably from ethylene. Preferably the elastomeric copolymer (E1) is an ethylene propylene non-conjugated diene monomer polymer (EPDM) or an ethylene propylene rubber (EPR), the latter especially preferred, with a propylene and/or ethylene content as defined in this paragraph.

Further it is preferred that the intrinsic viscosity (IV) of the xylene cold soluble (XCS) fraction of the heterophasic propylene copolymer (HECO) is at least 1.5 dl/g, more preferably in the range of 1.5 to 4.5 dl/g, more preferably in the range 1.7 to 4.0 dl/g.

Preferably the heterophasic propylene copolymer (HECO) is α-nucleated. Examples of suitable α-nucleating agents are inorganic additives such as talc, silica or kaolin, salts of monocarboxylic or polycarboxylic acids, e. g. sodium benzoate or aluminum tert-butylbenzoate, dibenzylidenesorbitol or its C₁-C₈-alkyl-substituted derivatives such as methyldibenzylidenesorbitol, ethyldibenzylidenesorbitol or dimethyidibenzylidenesorbitol or salts of diesters of phosphoric acid, e. g. sodium 2, 2'-methylenebis (4, 6,-di-tert-butylphenyl) phosphate or nonitol derivatives like 1,2,3-trideoxy-4,6:5,7-bis-O[(4-propylphenyl)methylene]-nonitol.

Accordingly preferred α-nucleating agents are selected from the group consisting of
(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and C₁-C₈-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

The nucleating agent content of the heterophasic propylene copolymer (HECO) is preferably up to 5 wt.-%.

Such additives are generally commercially available and are described, for example, in Gachter/Muller, Plastics Additives Handbook, 4th Edition, Hansa Publishers, Munich, 1993. In a preferred embodiment, the heterophasic propylene copolymer (HECO) contains from 0.1 to 1 wt.-%, preferably from 0.15 to 0. 25 wt.-%, of a nucleating agent, in particular salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate]. In another preferred embodiment the heterophasic propylene copolymer (HECO) contains vinylcycloalkane polymer and/or vinylalkane polymer.

Wherever in the instant invention it is referred to a so called "first heterophasic propylene copolymer (HECO)", the "heterophasic propylene copolymer (HECO)" as defined above is meant.

In case the polypropylene compound (PP-C) of the instant invention contains another heterophasic propylene copolymer (HECO) it shall essentially differ from the first heterophasic propylene copolymer (HECO).

For instance a suitable second heterophasic propylene copolymer (HECO) has a polypropylene matrix (PP-M) content, i.e. the xylene cold insoluble (XCI) content, preferably in the range of 60 to 95 wt.-%, more preferably of 65 to 90 wt.-%, yet more preferably 70.0 to 85.0 wt.-%. The elastomeric propylene copolymer (EC) content, i.e. the xylene cold soluble (XCS) content, in such a second heterophasic propylene copolymer (HECO) is preferably in the range of 5.0 to 40.0 wt.-%, more preferably in the range of 7.0 to 35.0 wt.-%, like 10.0 to 30.0 wt.-%.

Preferably the polypropylene matrix (PP-M) of the second heterophasic propylene copolymer (HECO) has a rather high melt flow rate than the first heterophasic propylene copolymer (HECO). Accordingly, it is preferred that the polypropylene matrix (PP-M), i.e. the xylene cold insoluble (XCI) fraction, of the second heterophasic propylene copolymer (HECO) has an MFR₂ (230 °C) in a range of 30.0 to 900.0 g/10 min, more preferably of 40.0 to 600.0 g/10 min, still more preferably of 50.0 to 400.0 g/10 min.

Concerning the comonomers of the elastomeric propylene copolymer (EC) of the second heterophasic propylene copolymer (HECO), reference is made to the first heterophasic propylene copolymer (HECO).

Accordingly the elastomeric propylene copolymer (EC) of the second heterophasic propylene copolymer (HECO) comprises at least units derivable from propylene and ethylene and may comprise other units derivable from a further α-olefin as defined above. However it is in particular preferred that the elastomeric propylene copolymer (EC) of the second heterophasic propylene copolymer (HECO) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as an elastomeric propylene copolymer (EC) of the second heterophasic propylene copolymer (HECO) is especially preferred, the latter most preferred.

Preferably the propylene content of elastomeric propylene copolymer (EC), i.e. the propylene content of the xylene cold soluble (XCS) fraction, of the second heterophasic propylene copolymer (HECO) is in the range from 50.0 to 75.0 wt.-%, more preferably 55.0 to 70.0 wt.-%. Thus in a specific embodiment the elastomeric propylene copolymer (EC), i.e. the xylene cold soluble (XCS) fraction, of the second heterophasic propylene copolymer (HECO) comprises from 25.0 to 50.0 wt.-%, more preferably 30.0 to 45.0 wt.-%, units derivable from ethylene. Preferably the elastomeric propylene copolymer (EC) of the second heterophasic propylene copolymer (HECO) is an ethylene propylene non-conjugated diene monomer polymer (EPDM) or an ethylene propylene rubber (EPR), the latter especially preferred, with a propylene and/or ethylene content as defined in this paragraph.

In case the polypropylene compound (PP-C) comprises a first heterophasic propylene copolymer (HECO) and a second heterophasic propylene copolymer (HECO), the ratio between the first and second heterophasic propylene copolymer (HECO) is preferably in the weight ratio [first HECO / second HECO] of 20/80 to 80/20, more preferably of 25/75 to 75/25, like 30/70 to 70/30.

A further essential component of the instant propylene compound (PP-C) is the presence of the plastomer (P). The plastomer (P) is (chemically) different to the elastomeric propylene copolymer(s) originating from the heterophasic propylene copolymers (HECO). More precisely the plastomer (P) shall not contain units derivable from propylene in an amount constituting the major part of the polymer. Accordingly the amount of units derivable from propylene shall be preferably less than 50 wt.-%, more preferably less than 30 wt.-%, still more preferably less than 10 wt.-%. In especially preferred embodiments no units derivable from propylene are detectable in the plastomer (P).

Accordingly it is preferred that the plastomer is selected from the group consisting of styrenic based elastomers, ethylene copolymers, polybutadiene, and polyisobutylene. More preferably the plastomer (P) is selected from the group consisting of styrenic based elastomers, ethylene copolymers, polybutadiene, and polyisobutylene, wherein the ethylene copolymers contain at least 50 wt.-% of units derivable of ethylene. It is especially preferred that the plastomer (P) is a styrenic based elastomer or an ethylene copolymer containing at least 50 wt.-% of units derivable of ethylene, the latter especially preferred.

In case the plastomer (P) is a styrenic based elastomer it is preferred that it is a styrene-ethylene/butylene-styrene (SEBS) block copolymer or a hydrogenated styrene-vinyl isoprene (SIS) block rubber. Preferably styrenic based elastomer , i.e. the styrene-ethylene/butylenestyrene (SEBS) block copolymer or the hydrogenated styrene-vinyl isoprene (SIS) block rubber, has a styrene content of equal or below 25 wt.-%, more preferably in the range of 10 to 25 wt.-%. Preferably the styrenic based elastomer, e.g. the styrene-ethylene/butylenestyrene (SEBS) block copolymer (B-1) or the hydrogenated styrene-vinyl isoprene (SIS) block rubber, has a density of equal or below 0.950 g/cm³, more preferred equal or below 0.910 g/cm³.

Preferably the plastomer (P) is however an ethylene copolymer. In one especially preferred embodiment the plastomer (P) is a linear low density polyethylene (LLDPE). Accordingly the plastomer (P), i.e. the linear low density polyethylene (LLDPE), has a density in the range 820 to 900 kg/m³, more preferably in the range of 850 to 900 kg/m³, yet more preferably in the range of 840 to 880 kg/m³, like in the range of 860 to 885 kg/m³. Further the plastomer (P), i.e. the linear low density polyethylene (LLDPE), is featured by a specific melt flow rate, namely by a melt flow rate MFR₂ (190 °C) measured according to ISO 1133 in the range of 0.3 to 30.0 g/10min, more preferably in the range of 0.5 to 15.0 g/10min. Preferably the plastomer (P), i.e. the linear low density polyethylene (LLDPE), is a copolymer containing as a major part units derivable from ethylene. Accordingly it is appreciated that the plastomer (P), i.e. the linear low density polyethylene (LLDPE), comprises at least 50.0 wt.-% units derivable from ethylene, more preferably at least 55.0 wt.-% of units derived from ethylene. Thus it is appreciated that the plastomer (P), i.e. the linear low density polyethylene (LLDPE), comprises 50.0 to 70.0 wt.-%, more preferably 55.0 to 65 wt.-%, units derivable from ethylene. The comonomers present in the plastomer (P), i.e. the linear low density polyethylene (LLDPE), are C₄ to C₂₀ α-olefins, like 1-butene, 1-hexene and 1-octene, the latter especially preferred. Accordingly in one specific embodiment the plastomer (P), i.e. the linear low density polyethylene (LLDPE), is an ethylene-1-octene polymer with the amounts given in this paragraph.

In addition to the polymer components the polypropylene compound may comprise a mineral filler (F). Preferably the mineral filler (F) is a phyllosilicate, mica or wollastonite. Even more preferred the mineral filler (F) is selected from the group consisting of mica, wollastonite, kaolinite, smectite, montmorillonite and talc. The most preferred the mineral filler (F) is talc.

The mineral filler (F) preferably has a particle size (d95%) of below 10.0 µm (d95% indicates that 95 wt-% of the filler has a particle size below 10.0 µm), more preferably below 8.0 µm.

Typically the mineral filler (F) has a surface area measured according to the commonly known BET method with N₂ gas as analysis adsorptive of less than 22 m²/g, more preferably of less than 20 m²/g, yet more preferably of less than 18 m²/g. Mineral fillers (F) fulfilling these requirements are preferably anisotropic mineral fillers (F), like talc, mica and wollastonite.

The instant polypropylene compound (PP-C) composition may additional contain typical other additives useful in the automobile sector, like carbon black, other pigments, antioxidants, UV stabilizers, nucleating agents, antistatic agents and slip agents, in amounts usual in the art.

### Polypropylene compound (PP-C)

The final polypropylene compound (PP-C) is of a complex structure. Probably the polypropylene matrix (PP-M) form a continuous phase of the polypropylene compound (PP-C) wherein the elastomeric propylene copolymer (EC) and the plastomer (P) form together or individually inclusions dispersed therein.

Additionally the inclusions of the final polypropylene compound (PP-C) may also contain the mineral filler (F); however preferably the mineral filler (F) forms separate inclusions within the polypropylene matrix (PP-M).

Preferably the polypropylene compound (PP-C) comprises
(a) 100 parts per weight of the heterophasic propylene copolymer (HECO),
(b) 10 to 50 parts per weight of the plastomer (P), and
(c) optionally 10 to 50 parts per weight of the mineral filler (F).

In this context it should be noted that the 100 part per weight represent the total sum of heterophasic propylene copolymers (HECO) used in the instant polypropylene compound (PP-C).

Further it is preferred that the obtained polypropylene compound (PP-C) has a melt flow rate MFR₂ (230 °C) measured according to ISO 1133 of 5.0 to 80.0 g/10min, more preferably of 10.0 to 60.0 g/10min, yet more preferably of 10.0 to 40.0 g/10min.

The obtained polypropylene compound is in particular featured by low CLTE values. The CLTE values are in particular lower to a polypropylene compound which contains the same components but has been produced differently, i.e. by adding all components together into the extruder. Thus the present invention is also directed to a polypropylene compound (PP-C) comprising a heterophasic propylene copolymer (HECO), a plastomer (P) and optionally a mineral filler (F), wherein said polypropylene compound (PP-C) has been produced by the process comprising the steps of
(A) feeding the heterophasic propylene copolymer (HECO) and the optional mineral filler (F) into an extruder (E),
(B) applying shear stress in a first mixing zone (MZ1) on the heterophasic propylene copolymer (HECO) and the optional mineral filler (F),
(C) adding downstream to the first mixing zone (MZ1) the plastomer (P) to the heterophasic propylene copolymer (HECO) and the optional mineral filler (F),
(D) applying shear stress in a second mixing zone (MZ2) on the heterophasic propylene copolymer (HECO), the plastomer (P) and the optional mineral filler (F),
(E) discharging the polypropylene compound (PP-C) from the extruder (E),
   wherein further
   (a) the heterophasic propylene copolymer (HECO) comprises
      (a-1) a polypropylene matrix (PP-M), and
      (a-2) an elastomeric propylene copolymer (EC) being dispersed in said polypropylene matrix (PP-M),
      and
   (b) the elastomeric propylene copolymer (EC) and the plastomer (P) are chemically different.

Concerning the further preferred embodiments of the components or process conditions, reference is made to the information provided above when discussing the instant process.

In one specific embodiment the present invention is directed to a polypropylene compound (PP-C) having a melt flow rate MFR₂ (230 °C) measured according to ISO 1133 of 10 to 40 g/10min, like 10.0 to 15.0 g/10min, said polypropylene compound (PP-C) comprises
(a) 15 to 45 wt.-%, preferably 25 to 35 wt.-%, of a first heterophasic propylene copolymer (H-PP),
(b) 15 to 45 wt.-%, preferably 25 to 35 wt.-%, of a second heterophasic propylene copolymer (H-PP),
(c) 8 to 20 wt.-%, like 12 to 18 wt.-% of a linear low density polyethylene (LLDPE), and
(d) 8 to 25 wt.-%, like 18 to 25 wt.-%, of a mineral filler (F),
   wherein
   (i) the first heterophasic propylene copolymer (H-PP) comprises a propylene homopolymer matrix (H-PP-M) and a first ethylene propylene rubber, said first heterophasic propylene copolymer (H-PP) has a melt flow rate MFR₂ (230 °C) in the range of 3.0 to 100.0 g/10min, preferably 8.0 to 30.0 g/10min, and a xylene cold soluble (XCS) content of 10 to 40 wt.-%, preferably of 22.0 to 40.0 wt.-%,
   (ii) the second heterophasic propylene copolymer (H-PP) comprises a propylene homopolymer matrix (H-PP-M) and a second ethylene propylene rubber, said second heterophasic propylene copolymer (H-PP) has a melt flow rate MFR₂ (230 °C) in the range of 10 to 200 g/10min, prefarably of 40.0 to 400.0 g/10min, and a xylene cold soluble content of 10 to 40 wt.-%, preferably of 7.0 to 20.0 wt.-%,
   (iii) the linear low density polyethylene (LLDPE) is an ethylene-1-butene-copolymer or an ethylene-1-octene-copolymer, said linear low density polyethylene (LLDPE) has an ethylene content in the range of 50 to 70 wt.-%, and
   (iv) the mineral filler (F) is talc,
wherein further the coefficient of linear thermal expansion (CLTE) determined in accordance with ISO 11359-2:1999 in a temperature range from -30 to +80°C at a heating rate of 1 °C/min is below 68 10⁻⁰⁵ µm/mK.

A preferred polypropylene compound (PP-C) is defined in claim 16.

Concerning further preferred embodiments of the first heterophasic propylene copolymer (H-PP), the second heterophasic propylene copolymer (H-PP), the linear low density polyethylene (LLDPE) and the talc, reference is made to the "component section" of the instant invention. Concerning the linear low density polyethylene (LLDPE) it is especially preferred it is an ethylene-1-octene-copolymer having a 1-octene content in the range of 35 to 40 wt.%, like 38 wt.-%.

The present invention will now be described in further detail by the examples provided below.

### EXAMPLES

### 1. Definitions/Measuring Methods

The following definitions of terms and determination methods apply for the above general description of the invention as well as to the below examples unless otherwise defined. **Density** is measured according to ISO 1183-1 - methode A (2004). Sample preparation is done by compression moulding in accordance with ISO 1872-2:2007. **MFR₂ (230 °C)** is measured according to ISO 1133 (230 °C, 2.16 kg load). **MFR₂ (190 °C)** is measured according to ISO 1133 (190 °C, 2.16 kg load).

### Quantification of comonomer content by FTIR spectroscopy

The comonomer content is determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of between 100-500 µm and spectra recorded in transmission mode. Specifically, the ethylene content of a polypropylene-co-ethylene copolymer is determined using the baseline corrected peak area of the quantitative bands found at 720-722 and 730-733 cm⁻¹. Quantitative results are obtained based upon reference to the film thickness.

### Styrene content

The styrene content is measured by Fourier transform infrared spectroscopy (FTIR). A thin film of 300 µm thickness is prepared from pelletized material by hot-pressing (190 °C, 100 bar, 1 minute). Per sample, two films are prepared. The so prepared film-samples are measured by a Perkin Elmer IR-Spectrophotometer System 2000FTIR. The peak at 1602 cm⁻¹ (Phenyl-Absorption) is integrated and evaluated by using an internally established calibration curve. The arithmetic mean of two measurements is given as result.

**Intrinsic viscosity** is measured according to DIN ISO 1628/1, October 1999 (in Decalin at 135 °C).

**The tensile strength,** including tensile stress at yield, strain at yield and elongation at break, is measured according to ISO 527-1 (cross head speed 50 mm/min) at 23 °C. The tensile modulus is measured at 23 °C according to ISO 527-1 (cross head speed 1 mm/min) using injection moulded specimens according to ISO 527-2(1B), produced according to EN ISO 1873-2 (dog 10 bone shape, 4 mm thickness).

**Coefficient of linear thermal expansion:** The coefficient of linear thermal expansion (CLTE) was determined in accordance with ISO 11359-2:1999 on 10 mm long pieces cut from the same injection molded specimens as used for the flexural modulus determination. The measurement was performed in a temperature range from -30 to +80°C at a heating rate of 1 °C/min.

**Charpy impact test:** The Charpy notched impact strength (Charpy NIS) is measured according to ISO 179 2C / DIN 53453 at 23 °C, -20 °C, using injection molded bar test specimens of 80x10x4 mm³mm³ prepared in accordance with ISO 294-1:1996.

**The xylene solubles (XCS, wt.-%):** Content of xylene cold solubles (XCS) is determined at 25 °C according ISO 16152; first edition; 2005-07-01

**Cutoff particle size d95 (Sedimentation)** is calculated from the particle size distribution [mass percent] as determined by gravitational liquid sedimentation according to ISO 13317-3 (Sedigraph)

**Specific surface area** is determined as the BET surface according to DIN 66131/2.

### 2. Examples

**Table 1: Heterophasic propylene copolymers (HECO)**

| | | **HECO 1** | **HECO 2** | **HECO 3** |
|---|---|---|---|---|
| MFR₂* | [g/10min] | 12.0 | 11.0 | 100.0 |
| MFR₂* of XCI | [g/10min] | 35.0 | 55.0 | 160.0 |
| XCS | [wt%] | 29.8 | 30.0 | 15.0 |
| C2 total | [wt%] | 15.8 | 12.5 | 8.0 |
| C2 in XCS | [wt%] | 45 | 38 | 39 |
| IV of XCS | [dl/g] | 2.1 | 3.5 | 2.1 |

| | | | | |
|---|---|---|---|---|
| * at 230 °C - "HECO 1": is the commercial product EE041AE of Borealis - "HECO 2": is the commercial product EE050AE of Borealis - "HECO 3": is the commercial product BJ356MO of Borealis | | | | |

**Table 2: polypropylene compounds**

| | | **1** | **2** | **3** | **4*** |
|---|---|---|---|---|---|
| HECO 1 | [wt.-%] | 90 | 85 | 85 | - |
| HECO 2 | [wt.-%] | - | - | - | 30 |
| HECO 3 | [wt.-%] | - | - | - | 30 |
| P1 | [wt.-%] | - | - | - | 15 |
| P2 | [wt.-%] | 10 | - | - | - |
| P3 | [wt.-%] | | 15 | - | - |
| P4 | [wt.-%] | - | - | 15 | - |
| Talc | [wt.-%] | - | - | - | 22 |

| | | | | | |
|---|---|---|---|---|---|
| * remaining part to 100 weight % are additives, like antioxidants - "P 1": is the commercial product Engage 8100 of Dow Elastomers having a 1-octene content of 38 wt.%. - "P 2": is the commercial product Engage 8150 of Dow Elastomers having a 1-octene content of 39 wt.%. - "P 3": is the commercial product Hybrar 7125 of Kuraray having a styrene content of 20 wt.-%, a MFR₂ (230°C) of 4 g/10min and a density of 0.90 g/cm³ - "P4": is the commercial product Hybrar 7311 of Kuraray having a styrene content of 12 wt.-%, a MFR₂ (230°C) of 5.7 g/10min and a density of 0.89 g/cm³ - "Talc": is the commercial talc Jetfine 3CA of Luzenac Europe, France | | | | | |

The extruder used to prepare the inventive examples (IE) and comparative examples (CE) was a Coperion W&P co-rotating twin-screw extruder ZSK - 18 Mega Lab.

**Table 3: Properties of the polypropylene compound (PP-C)**

| | | CE 1 | IE 1 | CE 2 | IE 2 | CE 3 | IE 3 | CE 4 | IE 4 |
|---|---|---|---|---|---|---|---|---|---|
| MFR₂* | [g/10min] | 8.7 | 9.0 | 8.2 | 8.9 | 7.7 | 7.6 | 19 | 19 |
| EM | [MPa] | 769 | 752 | 500 | 472 | 384 | 373 | 1790 | 1764 |
| SB | [%] | 510 | 542 | 514 | 574 | 509 | 547 | 55 | 54 |
| NIS (-20°C) | [kJ/m²] | 21 | 11 | 4 | 4 | 9 | 9 | 12 | 12 |
| CLTE (-30/80) | [10⁻⁰⁵ µm/mK] | 105 | 82 | 100 | 83 | 114 | 94 | 68 | 59 |

| | | | | | | | | | |
|---|---|---|---|---|---|---|---|---|---|
| * at 230 °C - EM: modulus of elasticity - SB: strain at break - NIS: Notched Charpy impact - CLTE: coefficient of linear thermal expansion | | | | | | | | | |

## Claims

1. Process for producing a polypropylene compound (PP-C) comprising a heterophasic propylene copolymer (HECO), a plastomer (P) and optionally a mineral filler (F), said process comprises the steps of
(A) feeding the heterophasic propylene copolymer (HECO) and the optional mineral filler (F) into an extruder (E),
(B) applying shear stress in a first mixing zone (MZ1) on the heterophasic propylene copolymer (HECO) and the optional mineral filler (F),
(C) adding downstream to the first mixing zone (MZ1) the plastomer (P) to the heterophasic propylene copolymer (HECO) and the optional mineral filler (F),
(D) applying shear stress in a second mixing zone (MZ2) on the heterophasic propylene copolymer (HECO), the plastomer (P) and the optional mineral filler (F),
(E) discharging the polypropylene compound (PP-C) from the extruder (E),
wherein further
(a) the heterophasic propylene copolymer (HECO) comprises
(a-1) a polypropylene matrix (PP-M), and
(a-2) an elastomeric propylene copolymer (EC) being dispersed in said polypropylene matrix (PP-M),
and
(b) the elastomeric propylene copolymer (EC) and the plastomer (P) are chemically different.

2. Process according to claim 1, wherein
(a) the heterophasic propylene copolymer (HECO) is molten
and/or
(b) agglomerates of the mineral filler (F) are broken down in the first mixing zone (MZ1).

3. Process according to claim 1 or 2, wherein
(a) the mechanical energy input in the first mixing zone (MZ1) is higher than the mechanical energy input in the second mixing zone (MZ2),
and/or
(b) the extruder (E) comprises in operation direction a feed-throat (FT), the first mixing zone (MZ1), the second mixing zone (MZ2) and a die (D), wherein between the first mixing zone (MZ1) and the second mixing zone (MZ2) a side feed-throat (SFT) is located
and/or
(c) the discharged molten polyproplyne compound (PP-C) is transferred into a mold to form an article.

4. Process according to any one of the preceding claims, wherein
(a) the heterophasic propylene copolymer (HECO) has xylene cold soluble (XCS) content measured according to ISO 16152 (25 °C) in the range of 20 to 50 wt.-%,
and/or
(b) the elastomeric propylene copolymer (EC) comprises units derivable from
(b1) propylene, and
(b2) ethylene and/or a C4 to C12 α-olefin.

5. Process according to any one of the preceding claims, wherein the comonomer content, i.e. the total amount of units derivable from ethylene and/or a C₄ to C₁₂ α-olefin, within the elastomeric propylene copolymer (EC) is in the range of 20 to 50 wt.-%, as determined by FTIR spectroscopy.

6. Process according to any one of the preceding claims, wherein
(a) the polypropylene matrix (PP-M) is a propylene homopolymer (H-PP) and/or
(b) the elastomeric propylene copolymer (EC) is a propylene ethylene rubber.

7. Process according to any one of the preceding claims, wherein the plastomer (P) is selected from the group consisting of styrenic based elastomers, ethylene copolymers, polybutadiene, and polyisobutylene.

8. Process according to any one of the preceding claims, wherein the plastomer (P) is the linear low density polyethylene (LLDPE).

9. Process according to claim 8, wherein the ethylene content of the linear low density polyethylene (LLDPE) is at least 50 wt.-%, as determined by FTIR spectroscopy.

10. Process according to claim 8 or 9, wherein the plastomer (P) is
(a) an ethylene-1-butene copolymer,
or
(b) an ethylene-1-octene copolymer.

11. Process according to any one of the preceding claims, wherein the mineral filler is talc (T).

12. Process according to any one of the preceding claims, wherein the polypropylene compound (PP-C) comprises
(a) 100 parts per weight of the heterophasic propylene copolymer (HECO),
(b) 10 to 50 parts per weight of the plastomer (P), and
(c) optionally 10 to 50 parts per weight of the mineral filler (F).

13. Polypropylene compound (PP-C) comprising a heterophasic propylene copolymer (HECO), a plastomer (P) and optionally a mineral filler (F), wherein said polypropylene compound (PP-C) has been produced by the process according to claim 1.

14. Polypropylene compound (PP-C) according to claim 13, wherein the heterophasic propylene copolymer (HECO), the plastomer (P) and the mineral filler (F) are further defined according to any one of the preceding claims 4 to 12.

15. Polypropylene compound (PP-C) according to claim 13 or 14, wherein the applied process is further defined by the claims 2 or 3.

16. Polypropylene compound (PP-C) having a melt flow rate MFR₂ (230 °C) measured according to ISO 1133 of 10.0 to 15.0 g/10min, said polypropylene compound (PP-C) comprises
(a) 25 to 35 wt.-% of a first heterophasic propylene copolymer (H-PP),
(b) 25 to 35 wt.-% of a second heterophasic propylene copolymer (H-PP),
(c) 8 to 20 wt.-% of a linear low density polyethylene (LLDPE), and
(d) 8 to 25 wt.-% of a mineral filler (F),
wherein
(i) the first heterophasic propylene copolymer (H-PP) comprises a propylene homopolymer matrix (H-PP-M) and a first ethylene propylene rubber, said first heterophasic propylene copolymer (H-PP) has a melt flow rate MFR₂ (230 °C), measured according to ISO 1133, in the range of 3.0 to 30.0 g/10min and a xylene cold soluble (XCS) content of 22.0 to 50.0 wt.-%, as measured according to ISO 16152 (25°C),
(ii) the second heterophasic propylene copolymer (H-PP) comprises a propylene homopolymer matrix (H-PP-M) and a second ethylene propylene rubber, said second heterophasic propylene copolymer (H-PP) has a melt flow rate MFR₂ (230 °C), measured according to ISO 1133 in the range of 40.0 to 400.0 g/10min and a xylene cold soluble content of 7.0 to 20.0 wt.-%, as measured according to ISO 16152 (25°C),
(iii) the linear low density polyethylene (LLDPE) is an ethylene-1-butene-copolymer or an ethylene-1-octene-copolymer, said linear low density polyethylene (LLDPE) has an ethylene content in the range of 50 to 70 wt.-%, as measured by FTIR spectroscopy, and
(iv) the mineral filler (F) is talc,
wherein further the coefficient of linear thermal expansion (CLTE) determined in accordance with ISO 11359-2:1999 in a temperature range from -30 to +80°C at a heating rate of 1 °C/min is below 68 10⁻⁰⁵ µm/mK.

## Patentansprüche

1. Verfahren zur Herstellung einer Polypropylen-Verbindung (PP-C), umfassend ein heterophasisches Propylen-Copolymer (HECO), ein Plastomer (P) und gegebenenfalls einen Mineral-Füllstoff (F), wobei das Verfahren die Schritte umfasst von
(A) Zuführen des heterophasischen Propylen-Copolymers (HECO) und des wahlweisen Mineral-Füllstoffs (F) in einen Extruder (E),
(B) Anwenden von Scher-Belastung in einer ersten Misch-Zone (MZ1) auf das heterophasische Propylen-Copolymer (HECO) und den wahlweisen Mineral-Füllstoff (F),
(C) Zugabe, stromabwärts zu der ersten Misch-Zone (MZ1), des Plastomers (P) zu dem heterophasischen Propylen-Copolymer (HECO) und dem wahlweisen Mineral-Füllstoff (F),
(D) Anwenden von Scher-Belastung in einer zweiten Misch-Zone (MZ2) auf das heterophasische Propylen-Copolymer (HECO), das Plastomer (P) und den wahlweisen Mineral-Füllstoff (F),
(E) Ausgabe der Polypropylen-Verbindung (PP-C) aus dem Extruder (E),
wobei weiterhin
(a) das heterophasische Propylen-Copolymer (HECO) umfasst
(a-1) eine Polypropylen-Matrix (PP-M), und
(a-2) ein elastomeres Propylen-Copolymer (EC), das in der Polypropylen-Matrix (PP-M) dispergiert ist,
und
(b) das elastomere Propylen-Copolymer (EC) und das Plastomer (P) chemisch verschieden sind.

2. Verfahren nach Anspruch 1, wobei
(a) das heterophasische Propylen-Copolymer (HECO) geschmolzen wird,
und/oder
(b) Agglomerate bzw. Zuschlagstoffe des Mineral-Füllstoffs (F) in der ersten Misch-Zone (MZ1) zerbrochen werden.

3. Verfahren nach Anspruch 1 oder 2, wobei
(a) die Zufuhr mechanischer Energie in der ersten Misch-Zone (MZ1) höher als die Zufuhr mechanischer Energie in der zweiten Misch-Zone (MZ2) ist, und/oder
(b) der Extruder (E) in Betriebs-Richtung eine Material-Einfüllöffung bzw. einen Aufgabeschacht (FT), die erste Misch-Zone (MZ1), die zweite Misch-Zone (MZ2) und eine Form-Düse (D) umfasst, wobei zwischen der ersten Misch-Zone (MZ1) und der zweiten Misch-Zone (MZ2) eine seitliche Material-Einfüllöffung bzw. ein seitlicher Aufgabeschacht (SFT) angeordnet ist,
und/oder
(c) die ausgegebene geschmolzene Polypropylen-Verbindung (PP-C) zu einer Form überführt wird, um einen Gegenstand zu bilden.

4. Verfahren nach einem der vorangehenden Ansprüche, wobei
(a) das heterophasische Propylen-Copolymer (HECO) einen Gehalt an in kaltem Xylol Löslichem (XCS), gemessen gemäß ISO 16152 (25°C), in dem Bereich von 20 bis 50 Gew.-% aufweist,
und/oder
(b) das elastomere Propylen-Copolymer (EC) Einheiten, ableitbar von
(b1) Propylen und
(b2) Ethylen und/oder einem C4 bis C12 α-Olefin, umfasst.

5. Verfahren nach einem der vorangehenden Ansprüche, wobei der Comonomer-Gehalt, d.h. die Gesamt-Menge an Einheiten, ableitbar von Ethylen und/oder einem C₄ bis C₁₂ α-Olefin, in dem elastomeren Propylen-Copolymer (EC) in dem Bereich von 20 bis 50 Gew.-%, wie durch FTIR-Spektroskopie bestimmt, liegt.

6. Verfahren nach einem der vorangehenden Ansprüche, wobei
(a) die Polypropylen-Matrix (PP-M) ein Propylen-Homopolymer (H-PP) ist und/oder
(b) das elastomere Propylen-Copolymer (EC) ein Propylen-Ethylen-Kautschuk ist.

7. Verfahren nach einem der vorangehenden Ansprüche, wobei das Plastomer (P) aus der Gruppe, bestehend aus auf Styrol basierenden Elastomeren, Ethylen-Copolymeren, Polybutadien und Polyisobutylen, ausgewählt ist.

8. Verfahren nach einem der vorangehenden Ansprüche, wobei das Plastomer (P) das lineare Polyethylen niederer Dichte (LLDPE) ist.

9. Verfahren nach Anspruch 8, wobei der Ethylen-Gehalt des linearen Polyethylens niederer Dichte (LLDPE) mindestens 50 Gew.-%, wie durch FTIR-Spektroskopie bestimmt, ist.

10. Verfahren nach Anspruch 8 oder 9, wobei das Plastomer (P)
(a) ein Ethylen-1-Buten-Copolymer,
oder
(b) ein Ethylen-1-Octen-Copolymer ist.

11. Verfahren nach einem der vorangehenden Ansprüche, wobei der Mineral-Füllstoff Talkum (T) ist.

12. Verfahren nach einem der vorangehenden Ansprüche, wobei die Polypropylen-Verbindung (PP-C)
(a) 100 Gewichts-Teile des heterophasischen Propylen-Copolymers (HECO),
(b) 10 bis 50 Gewichts-Teile des Plastomers (P), und
(c) gegebenenfalls 10 bis 50 Gewichts-Teile des Mineral-Füllstoffs (F) umfasst.

13. Polypropylen-Verbindung (PP-C), umfassend ein heterophasisches Propylen-Copolymer (HECO), ein Plastomer (P) und gegebenenfalls einen Mineral-Füllstoff (F), wobei die Polypropylen-Verbindung (PP-C) durch das Verfahren nach Anspruch 1 hergestellt wurde.

14. Polypropylen-Verbindung (PP-C) nach Anspruch 13, wobei das heterophasische Propylen-Copolymer (HECO), das Plastomer (P) und der Mineral-Füllstoff (F) weiterhin nach einem der vorangehenden Ansprüche 4 bis 12 definiert werden.

15. Polypropylen-Verbindung (PP-C) nach Anspruch 13 oder 14, wobei das angewendete Verfahren weiterhin durch die Ansprüche 2 oder 3 definiert wird.

16. Polypropylen-Verbindung (PP-C) mit einer Schmelze-Massefließ-Rate MFR₂ (230°C), gemessen gemäß ISO 1133, von 10,0 bis 15,0 g/10 min, wobei die Polypropylen-Verbindung (PP-C) umfasst
(a) 25 bis 35 Gew.-% von einem ersten heterophasischen Propylen-Copolymer (H-PP),
(b) 25 bis 35 Gew.-% von einem zweiten heterophasischen Propylen-Copolymer (H-PP),
(c) 8 bis 20 Gew.-% von einem linearen Polyethylen niederer Dichte (LLDPE), und
(d) 8 bis 25 Gew.-% von einem Mineral-Füllstoff (F), wobei
(i) das erste heterophasische Propylen-Copolymer (H-PP) eine Propylen-Homopolymer-Matrix (H-PP-M) und einen ersten Ethylen-Propylen-Kautschuk umfasst, wobei das erste heterophasische Propylen-Copolymer (H-PP) eine Schmelze-Massefließ-Rate MFR₂ (230°C), gemessen gemäß ISO 1133, in dem Bereich von 3,0 bis 30,0 g/10 min und einen Gehalt an in kaltem Xylol Löslichem (XCS) von 22,0 bis 50,0 Gew.-%, wie gemäß ISO 16152 (25°C) gemessen, aufweist,
(ii) das zweite heterophasische Propylen-Copolymer (H-PP) eine Propylen-Homopolymer-Matrix (H-PP-M) und einen zweiten Ethylen-Propylen-Kautschuk umfasst, wobei das zweite heterophasische Propylen-Copolymer (H-PP) eine Schmelze-Massefließ-Rate MFR₂ (230°C), gemessen gemäß ISO 1133, in dem Bereich von 40,0 bis 400,0 g/10 min und einen Gehalt an in kaltem Xylol Löslichem von 7,0 bis 20,0 Gew.-%, wie gemäß ISO 16152 (25°C) gemessen, aufweist,
(iii) das lineare Polyethylen niederer Dichte (LLDPE) ein Ethylen-1-Buten-Copolymer oder ein Ethylen-1-Octen-Copolymer ist, wobei das lineare Polyethylen niederer Dichte (LLDPE) einen Ethylen-Gehalt in dem Bereich von 50 bis 70 Gew.-%, wie durch FTIR-Spektroskopie gemessen, aufweist, und
(iv) der Mineral-Füllstoff (F) Talkum ist,
wobei weiterhin der lineare Wärmeausdehnungs-Koeffizient (CLTE), bestimmt gemäß ISO 11359-2:1999 in einem Temperatur-Bereich von -30 bis +80°C bei einer Heiz-Rate von 1°C/min, unter 68 10⁻⁰⁵ µm/mK liegt.

## Revendications

1. Procédé pour produire un composé de polypropylène (PP-C) comprenant un copolymère de propylène hétérophasique (HECO), un plastomère (P) et à titre optionnel une charge minérale (F), ledit procédé comprend les étapes qui consistent
(A) à amener le copolymère de propylène hétérophasique (HECO) et la charge minérale (F) optionnelle dans une extrudeuse (E),
(B) à appliquer une contrainte de cisaillement, dans une première zone de mélange (MZ1), sur le copolymère de propylène hétérophasique (HECO) et la charge minérale (F) optionnelle,
(C) à ajouter, en aval de la première zone de mélange (MZ1), le plastomère (P) au copolymère de propylène hétérophasique (HECO) et à la charge minérale (F) optionnelle,
(D) à appliquer une contrainte de cisaillement, dans une seconde zone de mélange (MZ2), sur le copolymère de propylène hétérophasique (HECO), le plastomère (P) et la charge minérale (F) optionnelle,
(E) à sortir le composé de polypropylène (PP-C) de l'extrudeuse (E),
étant précisé par ailleurs
(a) que le copolymère de propylène hétérophasique (HECO) comprend
(a-1) une matrice de polypropylène (PP-M) et
(a-2) un copolymère de propylène élastomère (EC) qui est dispersé dans ladite matrice de polypropylène (PP-M),
et
(b) que le copolymère propylène élastomère (EC) et le plastomère (P) sont chimiquement différents.

2. Procédé selon la revendication 1, étant précisé
(a) que le copolymère de propylène hétérophasique (HECO) est fondu
et/ou
(b) que les agglomérats de la charge minérale (F) sont décomposés dans la première zone de mélange (MZ1).

3. Procédé selon la revendication 1 ou 2, étant précisé
(a) que l'énergie mécanique introduite dans la première zone de mélange (MZ1) est supérieure à l'énergie mécanique entrée dans la seconde zone de mélange (MZ2), et/ou
(b) que l'extrudeuse (E) comprend, dans le sens de fonctionnement, une goulotte d'alimentation (FT), la première zone de mélange (MZ1), la seconde zone de mélange (MZ2) et une filière (D), étant précisé qu'une goulotte d'alimentation latérale (SFT) se trouve entre la première zone de mélange (MZ1) et la seconde zone de mélange (MZ2),
et/ou
(c) que le composé de polypropylène (PP-C) fondu qui sort est transféré dans un moule pour former un article.

4. Procédé selon l'une quelconque des revendications précédentes, étant précisé
(a) que le copolymère de propylène hétérophasique (HECO) a un contenu soluble à froid dans le xylène (XCS) mesuré selon ISO 16152 (25°C) situé dans la plage de 20 à 50 % en poids,
et/ou
(b) que le copolymère de propylène élastomère (EC) comprend des unités aptes à être dérivées
(b1) du propylène et
(b2) de l'éthylène et/ou d'une oléfine α C4 à C12.

5. Procédé selon l'une quelconque des revendications précédentes, étant précisé que le contenu comonomère, c'est-à-dire la quantité totale d'unités aptes à être dérivées de l'éthylène et/ou d'une oléfine α C₄ à C₁₂, à l'intérieur du copolymère de propylène élastomère (EC) est situé dans la plage de 20 à 50 % en poids telle qu'elle est déterminée par spectroscopie FTIR.

6. Procédé selon l'une quelconque des revendications précédentes, étant précisé
(a) que la matrice de polypropylène (PP-M) est un homopolymère de propylène (H-PP)
et/ou
(b) que le copolymère de propylène élastomère (EC) est un caoutchouc éthylène propylène.

7. Procédé selon l'une quelconque des revendications précédentes, étant précisé que le plastomère (P) est choisi dans le groupe constitué par les élastomères à base de styrène, les copolymères d'éthylène, le polybutadiène et le polyisobutylène.

8. Procédé selon l'une quelconque des revendications précédentes, étant précisé que le plastomère (P) est le polyéthylène linéaire basse densité (LLDPE).

9. Procédé selon la revendication 8, étant précisé que le contenu d'éthylène du polyéthylène linéaire basse densité (LLDPE) est d'au moins 50 % en poids tel qu'il est déterminé par spectroscopie FTIR.

10. Procédé selon la revendication 8 ou 9, étant précisé que le plastomère (P) est
(a) un copolymère éthylène-1-butène,
ou
(b) un copolymère éthylène-1-octène.

11. Procédé selon l'une quelconque des revendications précédentes, étant précisé que la charge minérale est du talc (T).

12. Procédé selon l'une quelconque des revendications précédentes, étant précisé que le composé de polypropylène (PP-C) comprend
(a) 100 parties par poids du copolymère de propylène hétérophasique (HECO),
(b) 10 à 50 parties par poids du plastomère (P), et
(c) à titre optionnel 10 à 50 parties par poids de la charge minérale (F).

13. Composé de polypropylène (PP-C) comprenant un copolymère de propylène hétérophasique (HECO), un plastomère (P) et à titre optionnel une charge minérale (F), étant précisé que ledit composant de polypropylène (PP-C) a été produit par le procédé selon la revendication 1.

14. Composé de polypropylène (PP-C) selon la revendication 13, étant précisé que le copolymère de propylène hétérophasique (HECO), le plastomère (P) et la charge minérale (F) sont également définis selon l'une quelconque des revendications 4 à 12 précédentes.

15. Composé de polypropylène (PP-C) selon la revendication 13 ou 14, étant précisé que le procédé appliqué est également défini par les revendications 2 ou 3.

16. Composé de polypropylène (PP-C) présentant une vitesse d'écoulement de matière fondue MFR₂ (230°C), mesurée selon ISO 1133, de 10,0 à 15,0 g/10 min, ledit composant de polypropylène (PP-C) comprend
(a) 25 à 35 % en poids d'un premier copolymère de propylène hétérophasique (H-PP),
(b) 25 à 35 % en poids d'un second copolymère de propylène hétérophasique (H-PP),
(c) 8 à 20 % en poids d'un polyéthylène linéaire basse densité (LLDPE), et
(d) 8 à 25 % en poids d'une charge minérale (F),
étant précisé
(i) que le premier copolymère de propylène hétérophasique (H-PP) comprend une matrice d'homopolymère (H-PP-M) et un premier caoutchouc éthylène propylène, que ledit premier copolymère de propylène hétérophasique (H-PP) a une vitesse d'écoulement de matière fondue MFR₂ (230°C), mesurée selon ISO 1133, située dans la plage de 3,0 à 30,0 g/10 min et un contenu soluble à froid dans le xylène (XCS) de 22,0 à 50,0 % en poids tel qu'il est mesuré selon ISO 16152 (25°C),
(ii) que le second copolymère de propylène hétérophasique (H-PP) comprend une matrice d'homopolymère de propylène et un second caoutchouc éthylène propylène, que ledit copolymère de propylène hétérophasique (H-PP) a une vitesse d'écoulement de matière fondue MFR₂ (230°C), mesurée selon ISO 1133, située dans la plage de 40,0 à 400,0 g/10 min et un contenu soluble à froid dans le xylène de 7,0 à 20,0 % % en poids tel qu'il est mesuré selon ISO 16152 (25°C),
(iii) que le polyéthylène linéaire basse densité (LLDPE) est un copolymère éthylène-1-butène ou un copolymère éthylène-1-octène, que ledit polyéthylène linéaire basse densité (LLDPE) a un contenu en éthylène situé dans la plage de 50 à 70 % en poids tel qu'il est mesuré par spectroscopie FTIR, et
(iv) que la charge minérale (F) est du talc,
étant précisé par ailleurs que le coefficient de dilatation thermique linéaire (CLTE) déterminé selon ISO 11359-2:1999 dans une plage de température de -30 à +80°C à une vitesse de chauffage de 1°C/min est inférieur à 68 10⁻⁰⁵ µm/mK.
